## Europäisches Patentamt
## European Patent Office
## Office européen des brevets

(11) Veröffentlichungsnummer: **0 156 420**
**B1**

(12) **EUROPÄISCHE PATENTSCHRIFT**

(45) Veröffentlichungstag der Patentschrift:
**23.11.88**

(51) Int. Cl.⁴: **G 11 B 5/52**

(21) Anmeldenummer: **85200315.1**

(22) Anmeldetag: **04.03.85**

(54) Aufzeichnungs- und/oder Wiedergabegerät.

(30) Priorität: **06.03.84 AT 752/84**

(43) Veröffentlichungstag der Anmeldung:
**02.10.85 Patentblatt 85/40**

(45) Bekanntmachung des Hinweises auf die Patenterteilung:
**23.11.88 Patentblatt 88/47**

(84) Benannte Vertragsstaaten:
**DE FR GB IT**

(56) Entgegenhaltungen:
**AT-B-365 807**
**AT-B-365 808**
**AT-B-372 202**

(73) Patentinhaber: **N.V. Philips' Gloeilampenfabrieken,
Groenewoudseweg 1, NL- 5621 BA Eindhoven (NL)**

(72) Erfinder: **Hütter, Heinrich, p/a INT.
OCTROOIBUREAU B.V. Prof Holstlaan 6, NL- 5656
AA Eindhoven (NL)**

(74) Vertreter: **Schrijnemaekers, Hubert Joannes
Maria, Internationaal Octrooibureau B.V. Prof.
Holstlaan 6, NL- 5656 AA Eindhoven (NL)**

## Beschreibung

Die Erfindung bezieht sich auf ein Aufzeichnungs- und/oder Wiedergabegerät für ein Magnetband mit mindestens einem rotierend antreibbaren, das Magnetband entlang von Informationsspuren abtastenden Magnetkopf, der auf einem Träger angebracht ist, der eine Nabe, mit der der Träger auf einer rotierend antreibbaren Welle sitzt, und mindestens einen von der Nabe seitlich auskragenden, hohlzylindrischen, koaxial zur Welle verlaufenden, hülsenförmigen Ansatz aufweist, an dem zum Festklemmen desselben an der Welle eine auf denselben aufgesetzt, lösbare Klemmeinrichtung angreift, die einen zur Welle koaxialen, in Richtung der Welle verstellbaren Klemmring, von dem radial zur Welle hin drei gegenüber derselben gleich geneigt verlaufende, achsensymmetrisch zur Welle angeordnete, an dem hülsenförmigen Ansatz angreifende Klemmlappen abstehen, und zum Verstellen des Klemmringes einen mit demselben zusammenwirkenden, zur Welle koaxialen, verdrehbaren Verstellring aufweist, wobei die Klemmlappen durch Verstellen des Klemmringes beim Verdrehen des Verstellringes den hülsenförmigen Ansatz an der Welle festklemmen.

Ein derartiges Gerät ist aus der AT-PS-365 808 bekannt. Bei diesem bekannten Gerät ist zum Verstellen des Verstellringes ein zwischen diesem und dem Träger wirksames Gewinde vorgesehen, wobei die Verstellbewegung des Verstellringes über einen Druckring auf den Klemmring übertragen wird. Zum Festklemmen des hülsenförmigen Ansatzes der Nabe des Trägers an der Welle muss dabei der Träger festgehalten und der Verstellring verschraubt werden. Aufgrund der beim Festklemmen wirksamen grossen Reibungskräfte zwischen den Gewindeflächen des Gewindes und zwischen dem Verstellring und dem Druckring sowie dem Druckring und dem Klemmring muss daher beim Klemmvorgang der Träger mit relativ grossen Haltekräften festgehalten werden. Diese grossen Haltekräfte verursachen aber innere Spannungen im Träger und Deformationen desselben, die auch nach einem Klemmvorgang zumindest grösstenteils bestehen bleiben und die dann sowohl einen radialen als auch einen axialen Schlag bei der Rotation des Trägers zur Folge haben. Eine mit einem Schlag behaftete, ungleichmässige Rotation des Trägers wirkt sich aber störend auf eine gleichmässige und einwandfreie Abtastung der Informationsspuren durch den auf dem Träger angebrachten Magnetkopf bei einem Aufzeichnungs- und/oder Wiedergabevorgang von Informationen aus. Ferner kann sich der Klemmring der Klemmeinrichtung des bekannten Gerätes beim Festklemmen durch das Verschrauben des Verstellringes mitverdrehen, wobei dann die Klemmlappen des Klemmringes über den hülsenförmigen Ansatz des Trägers schleifen.

Hierdurch kommt es zu einer rillenförmigen, ungleichmässigen Deformation des hülsenförmigen Ansatzes, was insbesondere im Hinblick auf die Erzielung von grossen, einander gleichen und nach einem Lösen und neuerlichen Festklemmen der Klemmeinrichtung reproduzierbaren Klemmkräften mit den drei Klemmlappen ungüstig ist.

Die Erfindung hat sich zur Aufgabe gestellt, bei einem Gerät der eingangs angeführten Gattung die vorstehend angeführten Schwierigkeiten zu vermeiden und ein Gerät zu schaffen, bei dem beim Festklemmen des Trägers an der Welle ein Mitdrehen des Klemmringes mit Sicherheit vermieden ist, es zu keinen inneren Spannungen im Träger und Deformationen desselben kommt und zum Festklemmen des Trägers an der Welle mit besonders kleinen Betätigungskräften für die Klemmeinrichtung das Auslangen gefunden wird.

Die Erfindung ist hierzu dadurch gekennzeichnet, dass der Verstellring an seiner vom Klemmring abgewandten Seite am Träger achsensymmetrisch zur Welle abgestützt ist und ein koaxial zur Welle verlaufendes Zahnsegment aufweist, das zum Verdrehen des Verstellringes von einem drehend antreibbaren, mit dem Zahnsegment zumindest beim Antreiben desselben in Eingriff stehenden Zahnritzel antreibbar ist, dass der Klemmring eine dem Zahnsegment an dem Verstellring gegenüberliegende Öffnung aufweist, die von dem mit dem Zahnsegment in Eingriff stehenden Zahnritzel durchsetzt ist und umfangsseitig an demselben zumindest teilweise anliegt, und dass zum Verstellen des Klemmringes beim Verdrehen des Verstellringes mindestens drei achsensymmetrisch zur Welle angeordnete Kulissensteuerungen vorgesehen sind, die je eine an einem der beiden Ringe vorgesehene, in Richtung zum anderen der beiden Ringe ansteigende, im wesentlichen tangential zur Welle verlaufende Kulissenrampe und einen mit der Kulissenrampe zusammenwirkenden, am anderen der beiden Ringe vorgesehenen Kulissenfolger aufweisen.

Dadurch, dass nunmehr das Verdrehen des Verstellringes mittels eines Zahnradantriebes und das Verstellen des Klemmringes mittels Kulissensteuerungen erfolgt, ist durch entsprechende Wahl der Übersetzungsverhältnisse des Zahnradantriebes und der Kulissensteuerungen und aufgrund der günstigen Reibungseigenschaften derselben eine sehr hohe, verlustarme Kraftübersetzung erreicht, so dass hohe Klemmkräfte mit besonders kleinen Antriebskräften zum Antreiben des Zahnritzels erzielt werden. Aufgrund der kleinen Antriebskräfte sind die zum Festhalten des Trägers beim Festklemmen desselben an der Welle erforderlichen Haltekräfte nunmehr so klein, dass sie keine inneren Spannungen im Träger und Deformationen desselben verursachen, so dass auch nach dem Festklemmen des Trägers an der Welle eine schlagfreie Rotation desselben gewährleistet ist.

Hierdurch ist stets eine gleichmässige und einwandfreie Abtastung der Informationsspuren durch den auf dem Träger angebrachten Magnetkopf bei einem Aufzeichnungs- und/oder Wiedergabevorgang sichergestellt. Dadurch, dass beim Verdrehen des Verstellringes der Klemmring an dem die Öffnung in demselben durchsetzenden, das Zahnsegment am Verstellring antreibenden und dabei sich drehenden, sonst aber ortsfest gehaltenen Zahnritzel anliegt, wird ein Mitdrehen des Klemmringes auf einfache Weise verhindert.

Die Öffnung im Klemmring kann beispielsweise im Querschnitt rechtecking oder quadratisch ausgebildet sein und das sie durchsetzende Zahnritzel lose umgreifen. Als vorteilhaft hat sich erwiesen, wenn die Öffnung im Klemmring zylindrisch ausgebildet ist und umfangsseitig vollständig an dem sie durchsetzenden Zahnritzel anliegt. Auf diese Weise ist zusätzlich durch die zylindrische Öffnung im Klemmring eine Führung für das Zahnritzel bei dessen drehenden Antreiben gebildete.

Das Zahnsegment am Verstellring kann beispielsweise am Aussenumfang des Verstellringes vorgesehen sein. Als vorteilhaft hat sich jedoch erwiesen, wenn der Verstellring einen koaxial zur Welle verlaufenden, kreisringförmigen Schlitz aufweist, wobei an einer der beiden koaxial zur Welle verlaufenden Begrenzungswände des Schlitzes das vom Zahnritzel antreibbare Zahnsegment vorgesehen ist. Auf diese Weise werden möglichst geringe radiale Abmessungen der Klemmeinrichtung erreicht.

Der Verdrehbereich für den Verstellring kann durch separate Anschläge, die beispielsweise am Träger vorgesehen sind, festgelegt sein. Als vorteilhaft hat sich erwiesen, wenn der Schlitz bei gelöster Klemmeinrichtung mit der Begrenzungswand an einem seiner beiden Enden und bei festgeklemmter Klemmeinrichtung mit der Begrenzungswand am anderen seiner beiden Enden an dem mit dem Zahnsegment in Eingriff stehenden Zahnritzel anliegt. Hierdurch ist ohne separate Hilfsmittel der Verdrehbereich für den Verstellring auf einfache Weise durch den mit dem Zahnritzel zusammenwirkenden Schlitz festgelegt.

Die Kulissenrampe jeder Kulissensteuerung kann beispielsweise am Klemmring vorgesehen und durch einen separaten an dem Klemmring befestigten Keil gebildet sein, mit dem als Kulissenfolger eine am Verstellring drehbar gelagerte, am Keil abrollbare Rolle zusammenwirkt. Als vorteilhaft hat sich erwiesen, wenn die Kulissenrampe jeder Kulissensteuerung am Verstellring vorgesehen und durch einen von demselben zum Klemmring hin keilförmig abgewinkelten kreisringförmigen Abschnitt des Verstellringes gebildet ist und der Kulissenfolger jeder Kulissensteuerung am Klemmring vorgesehen und durch einen umfangsseitig über den Klemmring hinausragenden kreisringförmigen Abschnitt des Klemmringes gebildet ist, der den die Kulissenrampe bildenden Abschnitt des Verstellringes zumindest teilweise übergreift. Hierdurch sind besonders einfache, einen geringen Raumbedarf beanspruchende Kulissensteuerungen erreicht, wobei zusätzlich auch eine kompakte, stabile und einfach herstellbare Ausbildung sowohl für den Verstellring als auch für den Klemmring erhalten ist.

Das Zahnritzel kann beispielsweise mit einem Wellenstumpf die Öffnung im Klemmring durchsetzen und mit dem Wellenstumpf am Klemmring drehbar gelagert sein, wobei dann das Zahnritzel mit dem Zahnsegment am Verstellring stets in Eingriff bleibt. Als vorteilhaft hat sich erwiesen, wenn das Zahnritzel vom Zahnsegment an dem Verstellring der Klemmeinrichtung lösbar und von derselben abnehmbar ausgebildet ist. Auf diese Weise ist erreicht, dass das abnehmbare Zahnritzel zum Antreiben der Zahnsegmente der Verstellringe von vielen Klemmeinrichtungen verwendet werden kann, so dass es sich erübrigt, für jede dieser Klemmeinrichtungen ein eigenes Zahnritzel vorzusehen, was eine beträchtliche Ersparnis darstellt.

Als besonders vorteilhaft hat sich hierbei erwiesen, wenn das Zahnritzel mit einer Handhabe zum drehenden Antreiben desselben versehen ist. Hierdurch ergibt sich eine besonders einfache Handhabung bei der Durchführung jedes Klemmvorganges. Zum Antreiben des Zahnritzels kann die Handhabe desselben von Hand aus oder maschinell antreibbar ausgebildet sein.

Bei einem Gerät, bei dem der Träger zwei von seiner Nabe entgegengesetzt seitlich auskragende, hohlzylindrische, koaxial zur Welle verlaufende, hülsenförmige Ansätze aufweist, an denen je eine Klemmeinrichtung angreift, wie dies an sich auch aus der eingangs zitierten AT-PS-365 808 bekannt ist, kann zum Antreiben des Zahnsegmentes am Verstellring jeder der beiden Klemmeinrichtungen ein separates Zahnritzel vorgesehen sein. Als vorteilhaft hat sich erwiesen, wenn die Zahnsegmente an den Verstellringen der beiden Klemmeinrichtungen denselben Teilkreisradius und dieselbe Verzahnung aufweisen und zum Antreiben der beiden Zahnsegmente zum gemeinsamen Verdrehen der beiden Verstellringe ein einziges zumindest beim Anbrieben der beiden Zahnsegmente durch einen Durchbruch im Träger hindurchgeführtes Zahnritzel vorgesehen ist. Hierdurch ist ein einfaches, zeitsparendes, sicheres und gleichmässiges Festklemmen des Trägers an der Welle mit zwei Klemmeinrichtungen erreicht.

In diesem Zusammenhang hat es sich bei einer Ausfürungsform, bei der das Zahnritzel zum Antreiben der Zahnsegmente an den Verstellringen der beiden Klemmeinrichtungen von diesen abnehmbar ausgebildet ist, weiters als vorteilhaft erwiesen, wenn die Verstellringe der beiden Klemmeinrichtungen je mindestens ein weiteres koaxial zur Welle verlaufendes Zahnsegment aufweisen und diese weiteren Zahnsegmente an den beiden Verstellringen denselben Teilkreisradius und dieselbe Verzahnung aufweisen und in Richtung der Welle fluchten und über eine Zahnradbrücke miteinander gekoppelt sind, wobei auch die beiden zum Verdrehen der beiden Verstellringe vorgesehenen Zahnsegmente in Richtung der Welle fluchtend gehalten sind. Auf diese Weise ist erreicht, dass auch bei von dem Klemmeinrichtungen abgenommenem Zahnritzel die beiden zum Verdrehen der beiden Verstellringe vorgesehenen Zahnsegmente fluchtend gehalten sind, so dass das Zahnritzel ohne Behinderung einfach durch Verstellen desselben in axialer Richtung mit beiden fluchtenden Zahnsegmenten in Eingriff bringbar ist.

Die Zahnradbrücke kann beispielsweise zwei koaxiale, je mit einem von den zwei weiteren Zahnsegmenten an den beiden Verstellringen in Eingriff stehende separate Zahnräder aufweisen, die über eine Welle miteinander verbunden und an mindestens einem der beiden Verstellringe drehbar gelagert sind. Auch kann die Zahnradbrücke durch ein einziges an mindestens einem der Verstellringe drehbar gelagertes, mit den zwei weiteren Zahnsegmenten in Eingriff stehendes Zahnrad gebildet sein. Als vorteilhaft hat sich erwiesen, wenn die Zahnradbrücke zwei koaxiale, je mit einem von den zwei weiteren Zahnsegmenten an den beiden Verstellringen in Eingriff stehenden Zahnräder aufweist, die über einen zylindrischen Verbindungsteil miteinander verbunden sind, dessen Durchmesser grösser als der Durchmesser des Fusskreises der beiden Zahnräder ist und der von den zwei weiteren Zahnsegmenten an den beiden Verstellringen in Richtung der Welle schwimmend zwischen den beiden Verstellringen gehalten ist. Hierdurch ist eine besonders einfache Ausbildung erreicht, bei der sich separate Mittel zur axialen Lagerung der Zahnradbrücke erübrigen.

Die weiteren Zahnsegmente an den beiden Verstellringen können beispielsweise am Aussenumfang der Verstellringe vorgesehen sein. Als vorteilhaft hat sich erwiesen, wenn die Verstellringe der beiden Klemmeinrichtungen je mindestens eine koaxial zur Welle verlaufende, kreisringförmige Ausnehmung aufweisen und diese Ausnehmungen an den beiden Verstellringen in Richtung der Welle fluchten, wobei je an einer der beiden koaxial zur Welle verlaufenden fluchtenden Begrenzungswände der Ausnehmungen eines der weiteren Zahnsegmente vorgesehen ist. Dies ist im Hinblick auf kleine radiale Abmessungen der Klemmeinrichtungen günstig.

Im Hinblick auf kleine radiale Abmessungen der Klemmeinrichtungen hat sich ferner als vorteilhaft erwiesen, wenn das zum Verdrehen eines Verstellringes vorgesehene Zahnsegment an demselben und das mindestens eine weitere Zahnsegment an demselben achsensymmetrisch zur Welle angeordnet sind. Hierdurch ist erreicht, dass alle Zahnsegmente an einem Verstellring den gleichen minimalen radialen Abstand von der Welle aufweisen.

Die Erfindung wird im folgenden anhand von zwei in den Zeichnungen dargestellten Ausführungsbeispielen, auf welche die Erfindung jedoch nicht beschränkt ist, näher beschrieben.

Die Fig. 1 zeigt schematisch in Draufsicht einen Teil eines Aufzeichnungs und/oder Wiedergabegerätes für ein Magnetband, wobei das Magnetband teilweise um eine zweiteilige Führungstrommel für dasselbe geschlungen ist.

Die Fig. 2 zeigt in einem Schnitt längs der Linie II-II in Fig. 1 die Führungstrommel des Gerätes gemäss Fig. 1, deren rotierend antreibbare, als Träger für zwei Magnetköpfe vorgesehene Trommelhälfte mit zwei Klemmeinrichtungen gemäss einem ersten Ausführungsbeispiel der Erfindung an der Antriebswelle für dieselbe festgeklemmt ist.

Die Fig. 3 zeigt in einer Draufsicht gemäss der Linie III-III in Fig. 2 einen Teil der Trommelhälfte gemäss dem ersten Ausführungsbeispiel der Erfindung in gegenüber der Fig. 2 vergrössertem Masstab, wobei die beiden Klemmeinrichtungen gelöst sind.

Die Fig. 4 zeigt in einem Schnitt gemäss der Linie IV-IV in Fig. 3 den Teil der Trommelhälfte mit den beiden gelösten Klemmeinrichtingen gemäss Fig. 3.

Die Fig. 5 zeigt analog wie die Fig. 3 den Teil der Trommelhälfte mit den beiden Klemmeinrichtungen gemäss dem ersten Ausführungsbeispiel der Erfindung, wobei die beiden Klemmeinrichtungen festgeklemmt sind.

Die Fig. 6 zeigt analog wie die Fig. 4 den Teil der Trommelhälfte mit den beiden festgeklemmten Klemmeinrichtungen im Schnitt.

Die Fig. 7 zeigt analog wie die Fig. 3 in einer Draufsicht einen Teil einer Trommelhälfte mit einer Klemmeinrichtung gemäss einem zweiten Ausführungsbeispiel der Erfindung, wobei die Klemmeinrichtung festgeklemmt ist.

Die Fig. 8 zeigt in einem Schnitt gemäss der Linie VIII-VIII in Fig. 7 den Teil der Trommelhälfte mit der festgeklemmten Klemmeinrichtung gemäss Fig. 7.

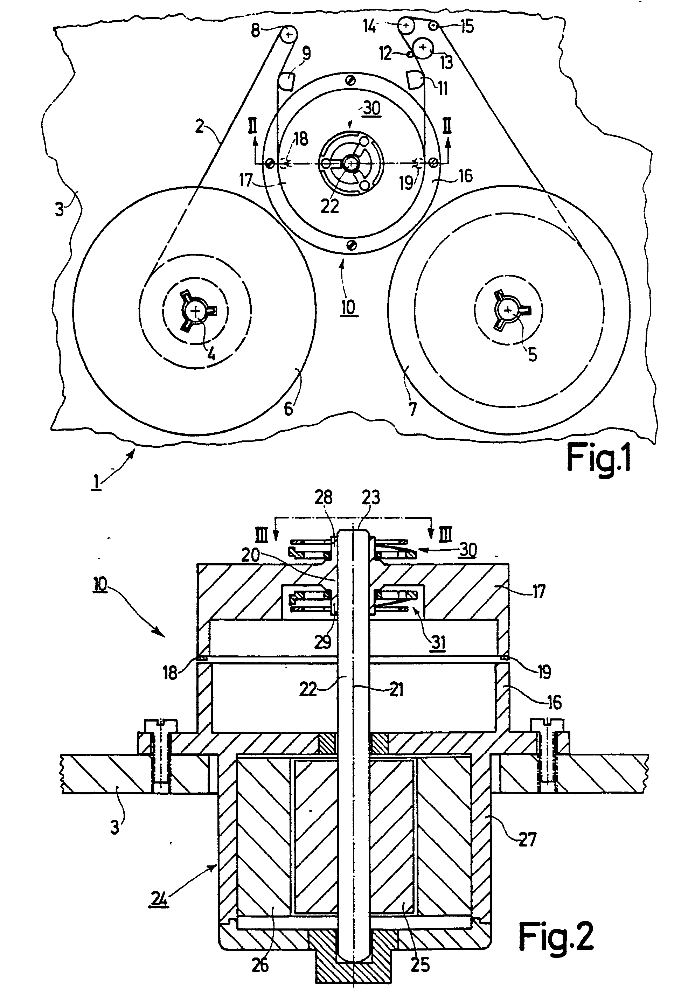

In Fig. 1 ist schematisch ein Teil eines Aufzeichnungs- und/oder Wiedergabegerätes 1 zum Aufzeichnen und/oder Wiedergeben von Bild- und Toninformationen auf einem Magnetband 2 dargestellt. Das Gerät 1 weist eine Grundplatte 3 auf, die einen Abwickeldorn 4 und einen Aufwickeldorn 5 trägt, welche zum Antreiben einer Abwickelspule 6 bzw. einer Aufwickelspule 7 dienen, die auf den entsprechenden Wickeldorn 4 bzw. 5 aufgesetzt sind. In seinem Verlauf von der Abwickelspule 6 zu der Aufwickelspule 7 ist das Magnetband 2 über eine Bandführung 8 zum Umlenken des Magnetbandes, über einen Löschmagnetkopf 9 zum Löschen der gesamten auf dem Magnetband gegebenenfalls gespeicherten Informationen, über eine Bandführungstrommel 10, die nachfolgend noch näher beschrieben ist, über einen Aufzeichnungs und/oder Wiedergabe-Magnetkopf 11 zum Aufzeichnen und/oder Wiedergeben von Toninformationen auf das Magnetband bzw. von dem Magnetband, über eine Antreibswelle 12, die im Zusammenwirken mit einer auf nicht näher dargestellte Weise an die Antriebswelle heranführbaren und an dieselbe andrückbaren Andruckrolle 13 zur gleichförmigen Fortbewegung des Magnetbandes bei einem Aufzeichnungs und/oder Wiedergabevorgang dient, und über zwei weitere Bandführungen 14 und 15 zum Umlenken des Magnetbandes 2 geführt. Selbstverständlich können die Abwickelspule 6 und die Aufwickelspule 7 auch in einer Kassette untergebracht sein, wobei dann das Magnetband mit Hilfe einer entsprechenden Einrichtung aus der Kassette herausführbar und um die vorerwähnten Bauteile schlingbar ist.

Wie bei derartigen Geräten vielfach üblich, wird das Magnetband schraubenlinienförmig um die Mantelfläche der Bandführungstrommel geführt, wobei mindestens ein an derselben angebrachter, rotierend antreibbarer Magnetkopf zum Aufzeichnen und/oder Wiedergeben vom Bildinformationen mit dem Magnetband in Wirkverbindung tritt und das Magnetband entlang von schräg zur Längsrichtung desselben verlaufenden Informationsspuren abtastet. Wie aus Fig. 2 ersichtlich ist, besteht beim vorliegenden Ausführungsbeispiel die Bandführungstrommel 10 aus einer auf der Grundplatte 3 festgeschraubten still stehenden Trommelhälfte 16 und aus einer zu dieser koaxialen, rotierend antreibbaren Trommelhälfte 17.

Die rotierend antreibbare Trommelhälfte 17, die in vorliegendem Fall als Träger für zwei an derselben angebrachte Magnetköpfe 18 und 19 zum Aufzeichnen und/oder Wiedergeben von Bildinformationen dient und beispielsweise aus einer Aluminiumlegierung besteht, weist eine Nabe 20 auf, mit der die Trommelhälfte 17 auf einer um eine Achse 21 rotierend antreibbaren Welle 22 im Bereich von deren freiem Ende 23 sitzt und mit der Welle kraftschlüssig verbunden ist. Der Antrieb der Welle 22 und damit der Trommelhälfte 17 erfolgt in Form eines Direktantriebes, wobei ein schematisch dargestellter Motor 24 unmittelbar mit der Welle 2 zusammenwirkt, indem der Rotor 25 des Motors koaxial auf die Welle aufgesetzt und mit derselben drehfest verbunden ist. Der Stator 26 des Motors ist hierbei in einem Motorgehäuse 27 untergebracht, das mit der stillstehenden Trommelhälfte 16 zu einer Einheit zusammengefasst ist. Auf diese Weise bilden der Motor 24 und die gesamte Bandführungstrommel 10 eine einfach auf der Grundplatte 3 montierbare Baueinheit.

Die Trommelhälfte 17 weist zwei von ihrer Nabe 20 entgegengesetzt seitlich auskragende, hohlzylindrische, koaxial zur Welle verlaufende, hülsenförmige Ansätze 28 und 29 auf, auf die zum Festklemmen derselben an der Welle 22 je eine lösbare Klemmeinrichtung 30 bzw. 31 aufgesetzt ist. Die beiden Klemmeinrichtungen 30 und 31 halten zur kraftschlüssigen Verbindung der Trommelhälfte 17 mit der Welle 22 die beiden hülsenförmigen Ansätze 28 und 29 im Bereich von zwei in axialer Richtung der Welle im Abstand voneinander liegenden Klemmzonen an der Welle 22 klemmend fest. Dabei ist es für eine einwandfreie und zufriedenstellende Funktion des Gerätes im Hinblick auf einen ordnungsgemässen Aufzeichnungs und/oder Wiedergabevorgang der Bildinformationen mit den dafür vorgesehenen Magnetköpfen von grosser Bedeutung, dass die als Träger für die Magnetköpfe dienende, rotierend antreibbare Trommelhälfte 17 mit Hilfe der Klemmeinrichtungen 30 und 31 exakt und sicher an der Welle 22 festgeklemmt ist, so dass die Trommelhälfte 17 absolut gleichmässig und ohne Schlag umläuft.

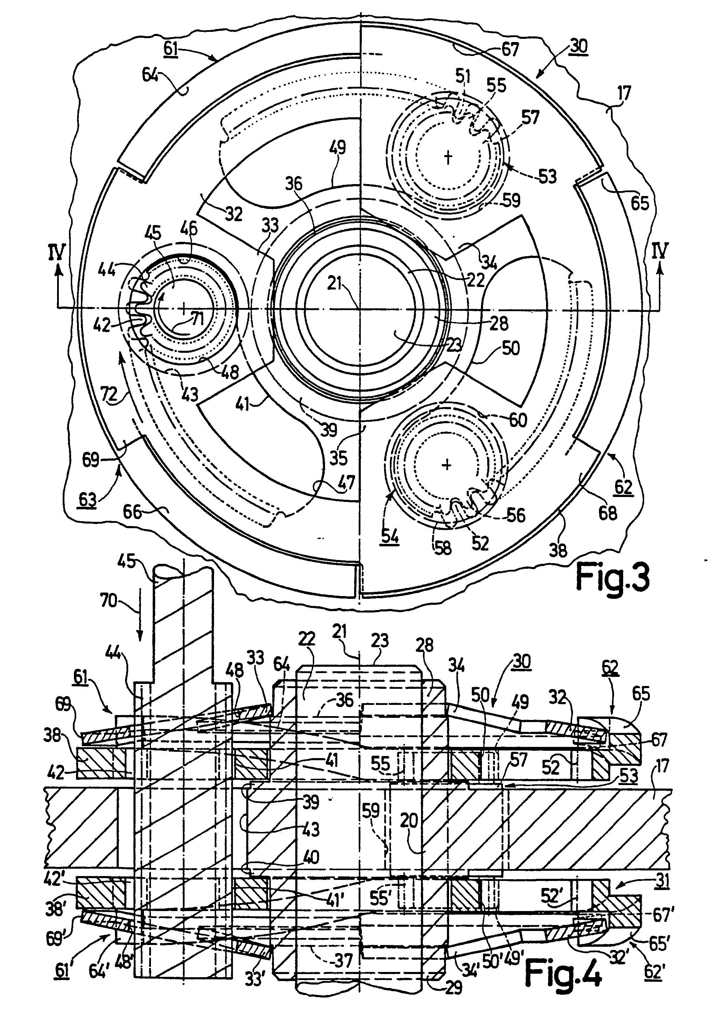

Im folgenden werden die beiden Klemmeinrichtungen 30 und 31 anhand der Figuren 3 bis 6 detailliert beschrieben. Wie aus diesen Figuren ersichtlich ist, sind die beiden Klemmeinrichtungen 30 und 31 vollkommen gleich ausgebilden und in Bezug auf den zwischen den beiden Klemmeinrichtungen liegenden Teil der Trommelhälfte 17 spiegelbildlich zueinander angeordnet. Aus diesem Grunde sind die einzelnen einander entsprechenden Teile der beiden Klemmeinrichtungen 30 und 31 mit gleichen Bezugszeichen versehen, wobei den Bezugszeichen für die Teile der Klemmeinrichtung 31 ein Apostroph hinzugefügt ist.

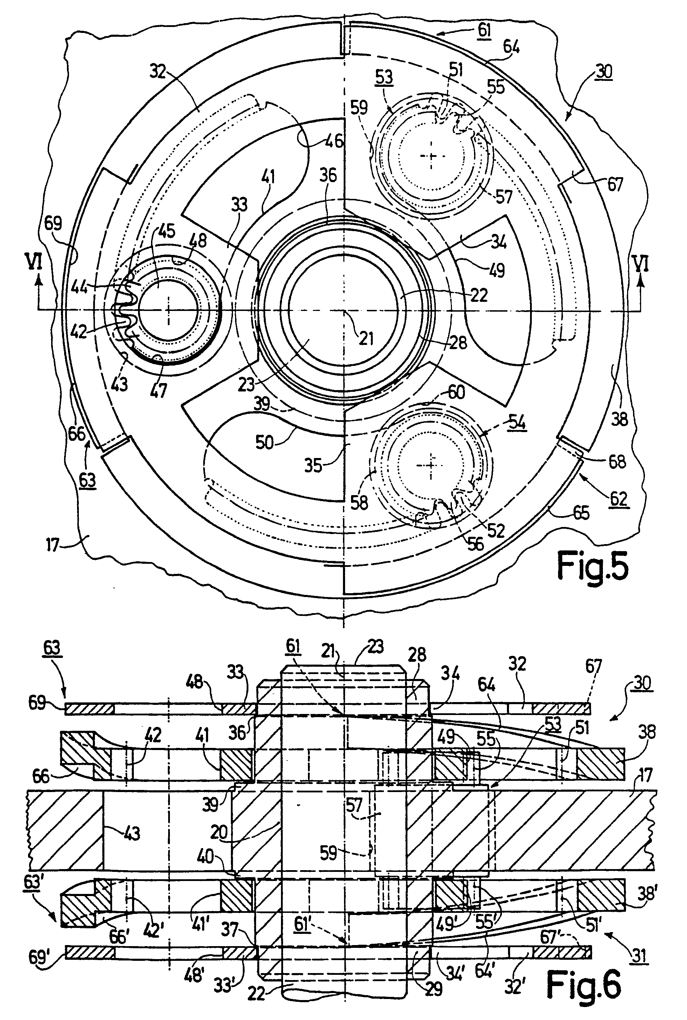

Die beiden Klemmeinrichtungen 30 und 31 weisen je einen zur Welle 22 koaxialen, in Richtung der Welle verstellbaren, plattenförmigen Klemmring 32, 32' auf, von dem radial zur Welle hin drei gegenüber der Welle gleich geneigt verlaufende, achsensymmetrisch zur Welle angeordnete, an dem hülsenförmigen Ansatz 28 bzw. 29 angreifende Klemmlappen 33, 34, 35 bzw. 33', 34', 35' abstehen. Aufgrund der achsensymmetrischen Anordnung der Klemmlappen verlaufen die von den Klemmlappen auf die hülsenförmigen Ansätze ausgeübten Klemmkräfte achsensymmetrisch exakt durch die Achse 21 der Welle 22, so dass vollkommen symmetrische Kräfteverhältnisse vorliegen, was hinsichtlich einer schlagfreien Rotation der Trommelhälfte 17 wesentlich ist. Die Klemmlappen liegen mit ihren freien Enden an einer Abstufung 36 bzw. 37 der Ansätze 28 bzw. 29 auf, wodurch in einfacher Weise sichergestellt ist, dass die drei Klemmlappen jedes Klemmringes 32, 32' nicht nur achsensymmetrisch, sondern zusätzlich auch im gleichen Niveau an dem betreffenden hülsenförmigen Ansatz angreifen und somit von den Klemmlappen beim Festklemmen auch kein Biegemoment auf die Ansätze und die Welle ausgeübt wird, was ebenfalls hinsichtlich einer schlagfreien Rotation der Trommelhälfte 17 wesentlich ist. Die Klemmringe 32, 32' können beispielsweise aus Stahl oder Phosphorbronze bestehen und eine Dicke in der Grössenordnung von einem halben Millimeter aufweisen. Bei gelösten Klemmeinrichtungen, wie dies in den Figuren 3 und 4 dargestellt ist, weisen die Klemmringe 32, 32' samt ihren Klemmlappen eine kegelige Form und bei festgeklemmten Klemmeinrichtungen, wie dies in den Figuren 5 und 6 dargestellt ist, weisen die Klemmringe 32, 32' samt ihren Klemmlappen eine gestreckte, ebene Form auf.

Zum Verstellen des Klemmringes 32, 32' jeder Klemmeinrichtung 30 bzw. 31 in axialer Richtung der Welle 22 weist jede der beiden Klemmeinrichtungen einen mit dem Klemmring 32, 32' über nachfolgend noch näher beschriebene achsensymmetrisch zur Welle 22 angeordnete Kulissensteuerungen zusammenwirkenden, zur Welle 2 koaxialen, verdrehbaren, plattenförmigen Verstellring 38, 38' auf. Die Verstellringe können beispielsweise aus gehärtetem Stahl bestehen und eine Dicke in der Grössenordnung von einem Millimeter aufweisen. Der Verstellring 38, 38' jeder Klemmeinrichtung 30 bzw. 31 ist an seiner vom Klemmring 32, 32' angewandten Seite an einer an den Ansatz 28 bzw. 29 angrenzenden Abstufung 39 bzw. 40 der Trommelhälfte 17 achsensymmetrisch zur Welle 22 abgestützt, was ebenfalls im Hinblick auf achsensymmetrische Kräfteverhältnisse wichtig ist. Beim Verdrehen des Verstellringes 38 von seiner in Fig. 3 dargestellten Lage in seine in Fig. 5 dargestellte Lage im Uhrzeigersinn entsprechend den Figuren 3 und 5 wird der Klemmring 32 der Klemmeinrichtung 30 in Richtung zum freien Ende 23 der Welle hin und beim gleichen Verdrehen des Verstellringes 38' wird der Klemmring 32' der Klemmeinrichtung 31 in Richtung vom freien Ende 23 der Welle 22 weg verstellt, wobei durch dieses Verstellen die Klemmringe 32, 32' samt ihren Klemmlappen 33, 34, 35, 33', 34', 35' aus ihrer kegeligen Form in ihre gestreckte, ebene Form gebracht werden und hierbei die Klemmlappen die hülsenförmigen Ansätze 28, 29 an der Welle 22 festklemmen, wie dies in den Figuren 5 und 6 dargestellt ist, wobei durch das Überführen der Klemmringe 32, 32' aus ihrer kegeligen Form in ihre gestreckte, ebene Form beim Festklemmen, wobei die freien Enden der Klemmlappen in radialer Richtung zu den hülsenförmigen Ansätzen 28, 29 verschoben werden, durch die Klemmringe selbst vorteilhafterweise eine hohe Kräfteübersetzung erreicht wird. Jeder der beiden Verstellringe 38, 38' weist einen den Verstellring durchsetzenden, koaxial zur Welle 22 verlaufenden, kreisringförmigen Schlitz 41, 41' auf, wobei an der von der Welle 22 weiter entfernt liegenden, koaxial zur Welle verlaufenden Begrenzungswand des Schlitzes 41, 41' im raumsparender undgeschützter Weise ein koaxial zur Welle verlaufendes Zahnsegment 42, 42' vorgesehen ist, das in den Figuren 3 und 5 teilweise nur mit punktierten Linien angedeutet ist. Die Zahnsegmente 42, 42' an den beiden Verstellringen 38, 38' der beiden Klemmeinrichtungen 30 und 31 weisen denselben Teilkreisradius und dieselbe Verzahnung auf.

Die beiden Zahnsegmente 42, 42' an den Verstellringen 38, 38' sind zum gemeinsamen Verdrehen der beiden Verstellringe von einem einzigen drehend antreibbaren, mit den Zahnsegmenten 42, 42' beim Antreiben derselben in Eingriff stehenden und hierbei durch einen zylindrischen Durchbruch 43 in der Trommelhälfte 17 hindurchgeführtes Zahnritzel 44 antreibbar. Hierdurch sind beide Klemmeinrichtungen in einfacher Weise zugleich festklemmbar und lösbar, wobei auch die im Inneren der Bandführungstrommel 10 sich befindende Klemmeinrichtung 31 einfach von der Aussenseite der Bandführungstrommel 10 her betätigt wird. Durch den Zahnradantrieb für die Verstellringe ist vorteilhafterweise eine hohe und praktisch verlustfreie Kräfteübersetzung erreicht. Das Zahnritzel 44 ist von den Zahnsegmenten 42, 42' an den Verstellringen 38, 38' lösbar und von den Klemmeinrichtungen 30 und 31 abnehmbar ausgebildet. Zum Lösen des Zahnritzels 44 von den beiden Zahnsegmenten 42, 42' bzw. zum Ineingriffbringen des Zahnritzels mit den Zahnsegmenten wird das Zahnritzel 44 einfach in axialer Richtung der Welle 22 durch die Schlitze 41, 41' in den Verstellringen 38, 38' und den Durchbruch 43 in der Trommelhälfte 17 hindurchgeführt. Zur Erzielung einer einfachen Handhabung und eines einfachen Antriebes des Zahnritzels 44 ist dasselbe mit einer schaftartigen Handhabe 45 zum drehenden Antreiben desselben versehen. Das lösbare Zahnritzel 44 kann zum Betätigen einer Vielzahl von Klemmeinrichtungen verwendet werden, wobei dasselbe zweckmässigerweise aus verschleissfestem Material besteht.

Zur Begrenzung des Verdrehbereiches der Verstellringe 38, 38' der in vorliegendem Fall etwa sechzig Winkelgrade beträgt, wirken einfach die Schlitze 41, 41' mit ihren endseitigen Begrenzungswänden mit dem mit den Zahnsegmenten 42, 42' in Eingriff stehenden Zahnritzel 44 zusammen, so dass sich separate Begrenzungsanschläge erübrigen. Die Schlitze 41, 41' in den beiden Verstellringen liegen bei gelösten Klemmeinrichtungen 30 und 31 je mit ihrer Begrenzungswand an ihrem mit dem Bezugszeichen 46, 46' bezeichneten Ende an dem Zahnritzel 44 an, wie dies aus Fig. 3 ersichtlich ist. Bei festgeklemmten Klemmeinrichtungen 30 und 31 liegen die Schlitze 41, 41' je mit ihrer Begrenzungswand an ihrem mit dem Bezugszeichen 47, 47' bezeichneten Ende an dem Zahnritzel 44 an, wie dies aus Fig. 5 ersichtlich ist.

Der Klemmring 32, 32' jeder Klemmeinrichtung 30 und 31 weist eine dem Zahnsegment 42, 42' an dem Verstellring 38, 38' der betreffenden Klemmeinrichtung in axialer Richtung der Welle

22 gegenüberliegende, zylindrisch ausgebildete Öffnung 48, 48' auf. Die Öffnung 48, 48' ist von dem mit den Zahnsegmenten 42, 42' an den beiden Verstellringen 38, 38' in Eingriff stehenden Zahnritzel 44 durchsetzt und liegt umfangsseitig vollständig an dem sie durchsetzenden Zahnritzel an. Auf diese Weise ist durch das beim Antreiben drehend angetriebene, sonst aber über die Handhabe 45 ortsfest gehaltene Zahnritzel 44 ein Mitverdrehen der Klemmringe 32, 32' beim Verdrehen der mit ihnen zusammenwirkenden Verstellringe 38, 38' auf einfache Weise verhindert.

Die Verstellringe 38, 38' der beiden Klemmeinrichtungen 30 und 31 weisen ferner je zwei koaxial zur Welle 22 verlaufende, durch Schlitze gebildete kreisringförmige Ausnehmungen 49, 50, 49', 50' auf, die paarweise in axialer Richtung der Welle 22 fluchten. Je an den beiden fluchtenden, von der Welle 22 weiter entfernt liegenden, koaxial zur Welle verlaufenden Begrenzungswänden der Schlitze 49, 49', 50, 50' ist in raumsparender und geschützter Weise ein weiteres koaxial zur Welle verlaufendes Zahnsegment 51, 51', 52, 52' vorgesehen. Wie die Figuren 3 und 5 zeigen, sind die Schlitze 41, 49, 50, 41', 49', 50' und folglich auch das zum Verdrehen eines Verstellringes 38, 38' vorgesehene Zahnsegment 42, 42' an demselben und die beiden weiteren Zahnsegmente 51, 52, 51', 52' an demselben achsensymmetrisch zur Welle 22 angeordnet, so dass hierfür insgesamt nur ein geringer radialer Raumbedarf erforderlich ist. Die weiteren Zahnsegmente 51, 51', 52, 52' an den beiden Verstellringen 38, 38' weisen denselben Teilkreisradius und dieselbe Verzahnung auf und fluchten paarweise in axialer Richtung der Welle 22, wobei der Teilkreisradius und die Verzahnung der weiteren Zahnsegmente mit dem Teilkreisradius und der Verzahnung des Zahnsegmentes 42, 42' zum Verdrehen der Verstellringe 38, 38' übereinstimmen.

Die weiteren Zahnsegmente 51, 51', 52, 52' sind paarweise über je eine Zahnradbrücke 53 bzw. 54 miteinander gekoppelt. Jede Zahnradbrücke 53 bzw. 54 weist zwei koaxiale, je mit einem von den zwei weiteren Zahnsegmenten 51, 51', 52, 52' an den beiden Verstellringen 38, 38' in Eingriff stehende Zahnräder 55, 55' 56, 56' auf, die in die Schlitze 49, 49', 50, 50' in den Verstellringen 38, 38' hineinragen und die über einen zylindrischen Verbindungsteil 57 bzw. 58 mit ihren gleich ausgebildeten Verzahnungen in axialer Richtung der Welle fluchtend einstückig miteinander verbunden sind. Jeder Verbindungsteil 57 bzw. 58 durchsetzt einen zylindrischen Durchbruch 59 bzw. 60 in der Trommelhälfte 17 und ist vom betreffenden Durchbruch drehbar geführt. Der Durchmesser des Verbindungsteiles 57 bzw. 58 jeder Zahnradbrücke 53 bzw. 54 ist etwas grösser als der Durchmesser des Kopfkreises der beiden durch ihn verbundenen Zahnräder 55, 55', 56, 56', also grösser als der Durchmesser des Fusskreises dieser Zahnräder gewählt. Auf diese Weise ist der Verbindungsteil 57 bzw. 58 und folglich die gesamte Zahnradbrücke 53 bzw. 54 ohne separate Mittel von den zwei weiteren fluchtenden Zahnsegmenten 51, 51', 52, 52' an den beiden Verstellringen 38, 38' in axialer Richtung der Welle 22 schwimmend zwischen den beiden Verstellringen 38, 38' gehalten. Über die mit den fluchtenden weiteren Zahnsegmenten 51, 51', 52, 52' in Eingriff stehenden Zahnradbrücken 53, 54 sind auch die beiden zum Verdrehen der beiden Verstellringe 38, 38' vorgesehenen Zahnsegmente 42, 42' in axialer Richtung der Welle fluchtend gehalten, und zwar auch dann, wenn das Zahnritzel 44 zum Antreiben der Zahnsegmente 42, 42' ausser Eingriff von diesen Zahnsegmenten steht, so dass das Zahnritzel 44 durch Verstellen desselben in axialer Richtung der Welle stets ohne Behinderung mit den beiden stets fluchtenden Zahnsegmenten 42, 42' in Eingriff bringbar ist.

Wie erwähnt, sind zum Verstellen der Klemmringe 32, 32' in axialer Richtung der Welle 22 beim Verdrehen der Verstellringe 38, 38' um die Welle achsensymmetrisch angeordnete Kulissensteuerungen vorgesehen, die den Vorteil von hohen Kräfteübersetzungen aufweisen. Durch die achsensymmetrische Anordnung der Kulissensteuerungen ist auch eine achsensymmetrische Kraftübertragung zwischen den Verstellringen und den Klemmringen erreicht. In vorliegendem Fall sind drei achsensymmetrisch zur Welle 22 angeordnete Kulissensteuerungen 61, 62, 63, 61', 62', 63' vorgesehen, die je eine an einem der beiden Ringe 32, 38, 32', 38' vorgesehene, in Richtung zum anderen der beiden Ringe ansteigende, tangential zur Welle verlaufende Kulissenrampe und einen mit der Kulissenrampe zusammenwirkenden, am anderen der beiden Ringe vorgesehenen Kulissenfolger aufweisen. Die Kulissenrampe jeder Kulissensteuerung 61, 62, 63, 61', 62', 63' ist am Verstellring 38, 38' vorgesehen und auf einfache Weise durch einen von demselben zum Klemmring 32, 32' hin keilförmig abgewinkelten, kreisringförmigen Abschnitt 64, 65, 66, 64', 65', 66' des Verstellringes 38, 38' gebildet. Diese Abschnitte werden in einem kombinierten Schneide- und Biegevorgang aus einem ursprünglich vollkommen ebenen Rohling für die Verstellringe herausgebogen, bevor dieselben einem Hältevorgang unterworfen werden. Der Kulissenfolger jeder Kulissensteuerung 61, 62, 63, 61', 62', 63' ist am Klemmring 32, 32' vorgesehen und auf einfache Weise durch einen umfangsseitig über den Klemmring hinausragenden kreisringförmigen Abschnitt 67, 68, 69, 67', 68', 69' gebildet, der den die Kulissenrampe bildenden Abschnitt 64, 65, 66, 64', 65', 66' des Verstellringes 38, 38' zumindest teilweise übergreift.

Zum Anbringen der Klemmeinrichtungen 30 und 31 an den Ansätzen 28 und 29 werden zuerst die Verstellringe 38, 38' über die Ansätze geschoben, bis sie sich an den Abstufungen 39 und 40 an der Trommelhälfte 17 abstützen, wonach die Klemmringe 32, 32' so auf die Ansätze aufgesetzt werden, dass die Klemmlappen 33, 34, 35, 33', 34', 35' an den Abstufungen 36, 37 der Ansätze anliegen und die zylindrischen Öffnungen 48, 48' in den Klemmringen 32, 32' und der zylindrische Durchbruch 43 in der Trommelhälfte 17 in axialer Richtung der Welle 22 fluchten und sich mit den hierbei ebenfalls in axialer Richtung der Welle fluchtenden Schlitzen 41, 41' in den Verstellringen 38, 38' endseitig überdecken. Die Klemmringe samt ihren Klemmlappen weisen hierbei ihre kegelige Form auf. Dabei ist es zweckmässig, wenn sich die Klemmlappen in radialer Richtung mit geringen Kräften am betreffenden hülsenförmigen Ansatz abstützen, um ein ungewolltes Abfallen der aufgesetzten Klemmringe und Verstellringe und ein ungewolltes Verdrehen der Klemmringe zu verhindern. Nach dem Anbringen der Klemmeinrichtungen 30 und 31 nehmen dieselben ihren gelösten Zustand ein. Mit der Handhabe 45 wird das Zahnritzel 44 durch Verschieben desselben in axialer Richtung der Welle 22 in Richtung des Pfeiles 70 mit den auf die Ansätze 28 und 29 aufgesetzten, gelösten Klemmeinrichtungen in Wirkverbindung gebracht Bei diesem Verschieben des Zahnritzels 44 tritt dasselbe nacheinander durch die zylindrische Öffnung 48 im Klemmring 32, durch den Schlitz 41 im Verstellring 38, durch den zylindrischen Durchbruch 43 in der Trommelhälfte 17, durch den Schlitz 41' im Verstellring 38' und durch die zylindrische Öffnung 48' im Klemmring 32' hindurch, wobei das Zahnritzel 44 mit den beiden Verzahnungen 42, 42' an den Begrenzungswänden der Schlitze 41, 41' in Eingriff tritt, wie dies aus den Figuren 3 und 4 ersichtlich ist.

Zum Festklemmen der Trommelhälfte 17 an der Welle 22 wird die Trommelhälte 17 von Hand aus oder mittels einer Vorrichtung festgehalten und das Zahnritzel 44 über seine Handhabe 45 von Hand aus oder motorisch in Richtung des in Fig. 3 dargestellten Pfeiles 71 drehend angetrieben, Hierdurch werden die Zahnsegmente 42, 42' an den Verstellringen 38, 38' in Richtung des in Fig. 3 dargestellten Pfeiles 72 mit hoher Kräfteübersetzung angetrieben, so dass die beiden Verstellringe 38, 38' in Richtung des Pfeiles 72 verdreht werden, wobei ein Mitverdrehen der Klemmringe 32, 32' von dem durch die Öffnungen 48, 48' in denselben hindurchgeführten Zahnritzel 44 verhindert ist. Durch das Verdrehen der Verstellringe 38, 38' werden die als Kulissenrampen vorgesehenen Abschnitte 64, 65, 66, 64', 65', 66' ,der Verstellringe 38, 38' in zunehmendem Masse hinter die als Kulissenfolger vorgesehenen Abschnitte 67, 68, 69, 67', 68', 69' der Klemmringe 32, 32' verstellt, wobei durch die Kulissensteuerungen eine weitere hohe Krafteübersetzung erreicht wird. Hierdurch wird jeder Klemmring 32, 32' in axialer Richtung vom betreffenden Verstellring 38, 38' weg verstellt, wobei die Verstellringe aus ihrer kegeligen Form ihre gestreckte, ebene Form gebracht werden, wodurch eine weitere hohe Kräfteübersetzung erreicht wird. Beim Verdrehen der Verstellringe 38, 38' werden über die Zahnsegmente 51, 51', 52, 52' die Zahnradbrocken 53 und 54 angetrieben, wobei sich die zylindrischen Verbindungsteile 57 und 58 der Zahnradbrocken in den zylindrischen Durchbrüchen 59, 60 in der Trommelhälfte 17 drehen, ohne aber störende Kraftwirkungen auf die Trommelhälfte auszuüben. Sobald die Schlitze 41, 41' mit ihren Begrenzungswänden am Ende 47, 47' derselben am Zahnritzel 44 anliegen, wie dies in Fig. 5 dargestellt ist, können.die mit dem Zahnritzel 44 in Eingriff stehenden Zahnsegmente 42, 42' nicht mehr weiter angetrieben werden und ist hierdurch auch ein weiteres Drehen des Zahnritzels 44 nicht möglich. Die als Kulissenrampe vorgesehenen Abschnitte 64, 65, 66, 64', 65', 66' der Verstellringe liegen dann praktisch zur Gänze hinter den als Kulissenfolger vorgesehenen Abschnitten 67, 68, 69, 67', 68', 69' der Klemmringe 32, 32', wodurch die Klemmringe über die Kulissensteuerungen 61, 62, 63, 61', 62', 63' in ihrer gestreckten, ebenen Form gehalten werden, in der die Klemmlappen 33, 34, 35, 33', 34', 35' der Klemmringe die hülsenförmigen Ansätze 28 und 29 an der Welle 22 festklemmen, Die Klemmeinrichtungen 30 und 31 nehmen also ihren festgeklemmten Zustand ein, wonach das Zahnritzel 44 wieder ausser Eingriff von den beiden Zahnsegmenten 42, 42' gebracht und von den beiden Klemmeinrichtungen 30, 31 abgenommen wird, dies aus Fig. 6 ersichtlich ist. Das Lösen der Klemmeinrichtung 30 und 31 erfolgt in sinngemäss umgekehrter Weise, wobei das mit den Zahnsegmenten 42, 42' in Eingriff gebrachte Zahnritzel 44 entgegen der Richtung des Pfeiles 71 angetrieben wird, bis sich die Schlitze 41, 41' mit ihren Begrenzungswänden am Ende 46, 46' derselben am Zahnritzel 44 anliegen, wie dies Fig. 3 zeigt.

Beim Festklemmen mit den vorstehend beschriebenen Klemmeinrichtungen werden vorteilhafterweise insgesamt drei hohe Kräfteübersetzungen erreicht, nämlich durch den Zahnradantrieb für die Verstellringe, durch die Verstellung der Klemmringe über Kulissensteuerungen und durch das Überführen der Klemmringe aus ihrer kegeligen in ihre ebene Form. Hierdurch wird insgesamt eine so hohe Kräfteübersetzung erreicht, dass mit besonders kleinen Betätigungs- bzw. Antriebskräften für das Zahnritzel sehr hohe Klemmkräfte, mit denen die Klemmlappen die hülsenförmigen Ansätze an der Welle klemmend festhalten, erzielt werden. Aufgrund der kleinen Betätigungskräfte für das Zahnritzel sind zum Festhalten der Trommelhälfte beim Festklemmen derselben an der Welle auch nur sehr kleine Haltekräfte erforderlich, die keine inneren Spannungen in der Trommelhälfte und Deformationen derselben verursachen, so dass stets ein gleichmässiges und schlagfreien Rotieren der Trommelhälfte und daher eine einwandfreie Funktionsweise des Gerätes gewährleistet ist.

Die Zahnsegmenten an den Verstellringen können selbstverständlich auch an den näher zur Welle liegenden, zur Welle koaxialen Begrenzungswänden der Schlitze vorgesehen sein. Die Kopplung der beiden Verstellringe kann auch mit einer einzigen Zahnradbrücke erfolgen, wobei dann jeder Verstellring nur ein weiteres Zahnsegment aufweist. Die Öffnungen in den Klemmringen, die das Zahnritzel beim Antreiben der Zahnsegmente zum Verdrehen der Verstellringe durchsetzt, können auch durch U-förmige Schlitze gebildet sein, die sich bis zum äusseren Umfang der Klemmringe erstrecken.

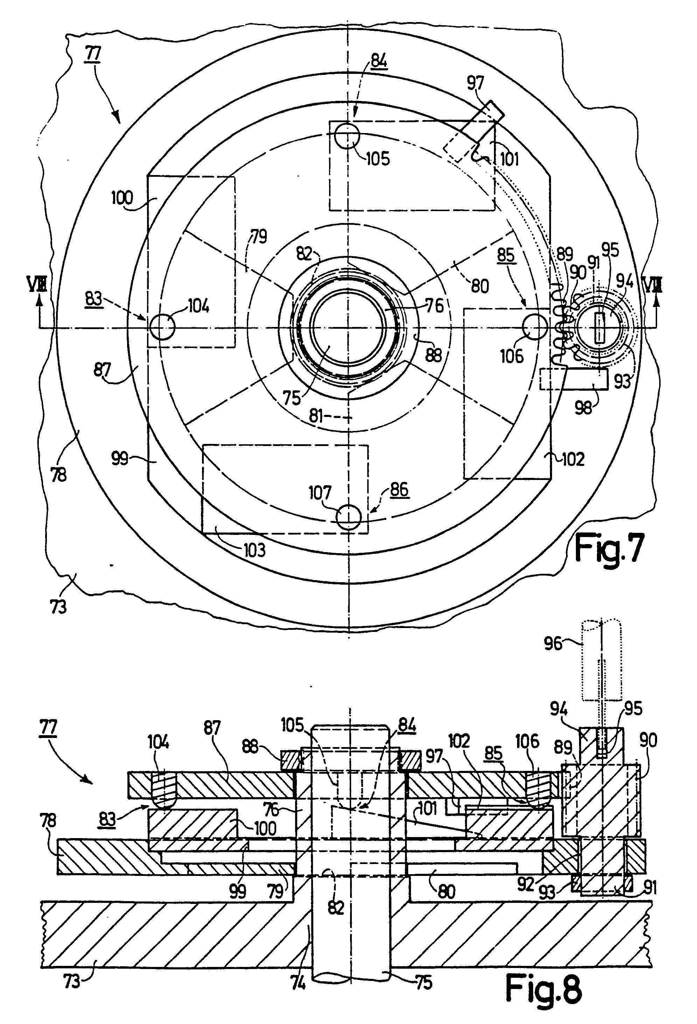

Bei dem Ausführungsbeispiel gemäss den Figuren 7 und 8 weist eine rotierend antreibbare Trommelhälfte 73 einen einzigen von ihrer Nabe 74 seitlich auskragenden, hohlzylindrischen, koaxial zu einer Welle 75 verlaufenden, hülsenförmigen Ansatz 76 auf, an dem zum Festklemmen desselben an der Welle eine lösbare Klemmeinrichtung 77 angreift.

Die Klemmeinrichtung 77 weist einen zur Welle koaxialen, in Richtung der Welle verstellbaren Klemmring 78 auf, von dem radial zur Welle hin drei gegenüber derselben gleich geneigt verlaufende, achsensymmetrisch zur Welle 75 angeordnete, an dem hülsenförmigen Ansatz 76 angreifenden Klemmlappen 79, 80, 81 abstehen. Der Klemmring 78 selbst weist sowohl bei gelöster als auch bei festgeklemmter Klemmeinrichtung eine ebene Form auf, wobei die Ringebene stets senkrecht zur Welle verläuft. Die Klemmlappen verlaufen bei gelöster Klemmeinrichtung gegenüber der Ebene des Klemmringes 78 geneigt, und zwar vom Klemmring 78 zur Trommelhälfte 74 hin, was der Einfachheit halber nicht dargestellt ist. Bei festgeklemmter Klemmeinrichtung verlaufen die Klemmlappen parallel zur Ebene des Klemmringes, wie dies aus Fig. 8 hervorgeht. Die Klemmlappen 79, 80, 81 liegen mit ihren freien Enden auf einer Abstufung 82 des hülsenförmigen Ansatzes 76 auf, wodurch die Klemmlappen exakt auf gleichem Niveau gegenüber dem Ansatz 76 und der Welle 75 gehalten sind.

Zum Verstellen des Klemmringes 78 in axialer Richtung der Welle 75 weist die Klemmeinrichtung 77 einen mit dem Klemmring über vier achsensymmetrisch zur Welle 75 angeordnete Kulissensteuerungen 83, 84, 85, 86 zusammenwirkenden, zur Welle koaxialen, verdrehbaren Verstellring 87 auf, der an der Trommelhälfte 73 über einen auf den hülsenförmigen Ansatz 76 aufgeschraubten Schraubring 88 an seiner vom Klemmring 78 abgewandten Seite achsensymmetrisch zur Welle 75 abgestützt ist. Der Verstellring 87 weist an seiner umfangsseitigen Stirnseite ein Zahnsegment 89 auf, das zum Verdrehen des Verstellringes 87 von einem drehend antreibbaren, mit dem Zahnsegment 89 ständig in Eingriff stehenden Zahnritzel 90 antreibbar ist.

Das Zahnritzel 90 weist an seiner der Trommelhälfte 73 zugewandten Seite einen ersten zylindrischen, koaxialen Wellenstumpf 91 auf, mit dem das Zahnritzel 90 eine dem Zahnsegment 89 an dem Verstellring 87 schräg gegenüberliegende zylindrische Öffnung 92 im Klemmring 78 durchsetzt, wobei die Öffnung 92 umfangsseitig vollständig an dem Wellenstumpf 91 des Zahnritzels 90 anliegt und auf diese Weise das Zahnritzel 90 drehbar führt. Auf das freie Ende des Wellenstumpfes 91 ist eine Sicherungsscheibe 93 klemmend aufgesetzt, die ein Lösen des Zahnritzels 90 vom Klemmring 78 verhindert. Das Zahnritzel 90 weist ferner an seiner von der Trommelhälfte 73 abgewandten Seite einen zweiten zylindrischen, koaxialen Wellenstumpf 94 auf, in dem eine schlitzförmige Ausnehmung 95 vorgesehen ist. In die Ausnehmung 95 ist ein in Fig. 8 schematisch mit punktierten Linien dargestelltes Antriebswerkzeug 96 zum drehenden Antreiben des Zahnritzels 90 einführbar. Das Werkzeug wird nur so tief in die Ausnehmung 95 eingeführt, dass eine Drehbewegung auf das Zahnritzel 90 übertragbar ist, hierbei jedoch keine Kräfte in axialer Richtung auf das Zahnritzel 90 ausgeübt werden, da solche Kräfte auch auf den Klemmring übertragen und diesen unsymmetrisch belasten würden, was nachteilig für ein exaktes Festklemmen wäre.

Zum Begrenzen des Verdrehbereiches des Verstellringes 87, der in vorliegendem Fall etwa fünfundvierzig Winkelgrade beträgt, sind an demselben zwei über dessen Umfang hinausragende Anschläge 97 und 98 vorgesehen, wobei bei gelöster Klemmeinrichtung 77 der Anschlag 97 am Zahnritzel 90 anliegt und bei festgeklemmter Klemmeinrichtung der Anschlag 98 am Zahnritzel 90 anliegt; letzteres ist in Fig. 7 dargestellt.

Wie erwähnt, sind zwischen dem Klemmring 78 und dem Verstellring 87 vier Kulissensteuerungen 83, 84, 85, 86 vorgesehen. In eine Ausnehmung des Klemmringes 78 ist ein beispielsweise aus reibungsarmen, abriebfesten Kunststoffmaterial bestehender Kulissenrampenträger 99 verdrehfest eingesetzt, von dem sich als Kulissenrampen vier keilförmig ausgebildete Fortsätze 100, 101, 102, 103 in Richtung zum Verstellring 87 hin erheben. Mit jedem dieser Fortsätze wirkt als Kulissenfolger ein in den Verstellring 87 eingesetzter, ein abgerundetes freies Ende aufweisender Stift 104, 105, 106, 107 zusammen, der beim Verdrehen des Verstellringes 87 über die Keilflächen der Fortsätze 100, 101, 102, 103 gleitet.

Die Funktionsweise zum Festklemmen bzw. zum Lösen der Klemmeinrichtung gemäss dem in den Figuren 7 und 8 dargestellten Ausführungsbeispiel stimmt praktisch mit der Funktionsweise des anhand der Figuren 3 bis 6 beschriebenen Ausführungsbeispieles überein, so dass diese hier nicht separat nochmals erläutert wird. Auch bei dem Ausführungsbeispiel gemäss den Figuren 7 und 8 ist durch den Zahnradantrieb für den Verstellring, durch die Verstellung des Klemmringes über Kulissensteuerungen und durch das Durchstrecken der im gelösten Zustand gegenüber dem Klemmring geneigten Klemmlappen in eine senkrecht zur Welle ausgerichtete Position eine sehr hohe Kräfteübersetzung erreicht und durch das Zusammenwirken des beim Antreiben vom Antriebswerkzeug ortsfest gehaltenen Zahnritzels über dessen Wellenstumpf mit der Öffnung im Klemmring ein Mitverdrehen des Klemmringes beim Antreiben des Verstellringes verhindert. Somit sind auch in diesem Fall die erfindungsgemässen Vorteile gegeben. Erwähnt sei noch, dass durch Weglassen des Sicherungsringes zum Verhindern des Lösens des Zahnritzels vom Klemmring auch dieses Zahnritzel von der Klemmeinrichtung lösbar wird, wobei dann auch das Werkzeug zum drehenden Antreiben des Zahnritzels mit demselben zu einer leicht und einfach handhabbaren Einheit verbunden wird.

**Patentansprüche**

1. Aufzeichnungs- und/oder Wiedergabegerät für ein Magnetband mit mindestens einem rotierend antreibbaren, das Magnetband entlang von Informationsspuren abtastenden Magnetkopf, der auf einem Träger (17; 73) angebracht ist, der eine Nabe (20; 74) mit der der Träger auf einer rotierend antreibbaren Welle (22; 75) sitzt, und mindestens einen von der Nabe seitlich auskragenden, hohlzylindrischen, koaxial zur Welle verlaufenden, hülsenförmigen Ansatz (28; 76) aufweist, an dem zum Festklemmen desselben an der Welle eine auf denselben aufgesetzte, lösbare Klemmeinrichtung angreift, die einem zur Welle koaxialen, in Richtung der Welle verstellbaren Klemmring (32; 78), von dem radial zur Welle hin drei gegenüber derselben gleich geneigt verlaufende, achsensymmetrisch zur Welle angeordnete, an dem hülsenförmigen Ansatz angreifende Klemmlappen (33, 34, 35; 79, 80, 81) abstehen, und zum Verstellen des Klemmringes einen mit demselben zusammenwirkenden, zur Welle koaxialen, verdrehbaren Verstellring (38; 87) aufweist, wobei die Klemmlappen durch Verstellen des Klemmringes beim Verdrehen des Verstellringes den hülsenförmigen Ansatz an der Welle festklemmen, dadurch gekennzeichnet, dass der Verstellring an seiner vom Klemmring abgewandten Seite am Träger achsensymmetrisch zur Welle abgestützt ist und ein koaxial zur Welle verlaufendes Zahnsegment (42; 89) aufweist, das zum Verdrehen des Verstellringes von einem drehend antreibbaren, mit dem Zahnsegment zumindest beim Antreiben desselben in Eingriff stehenden Zahnritzel (44; 90) antreibbar ist, dass der Klemmring eine dem Zahnsegment an dem Verstellring gegenüberliegende Öffnung (48; 92) aufweist, die von dem mit dem Zahnsegment in Eingriff stehenden Zahnritzel durchsetzt ist und umfangsseitig an demselben zumindest teilweise anliegt, und dass zum Verstellen des Klemmringes beim Verdrehen des Verstellringes mindestens drei achsensymmetrisch zur Welle angeordnete Kulissensteuerungen vorgesehen sind, die je eine an einem der beiden Ringe vorgesehene, in Richtung zum anderen der beiden Ringe ansteigende, im wesentlichen tangential zur Welle verlaufende Kulissenrampe (64, 65, 66; 100, 101, 102, 103) und einen mit der Kulissenrampe zusammenwirkenden, am anderen der beiden Ringe vorgesehenen Kulissenfolger (67, 68, 69; 104, 105, 106, 107) aufweisen.

2. Gerät nach Anspruch 1, dadurch gekennzeichnet, dass die Öffnung im Klemmring zylindrisch ausgebildet ist und umfanesseitig vollständig an dem sie durchsetzenden Zahnritzel anliegt.

3. Gerät nach Anspruch 1 oder 2, dadurch gekennzeichnet, dass der Verstellring (38) einen koaxial zur Welle verlaufenden kreisringförmigen Schlitz aufweist, wobei an einer der beiden koaxial zur Welle verlaufenden Begrenzungswände des Schlitzes (41) das vom Zahnritzel antreibbare Zahnsegment vorgesehen ist.

4. Gerät nach Anspruch 3, dadurch gekennzeichnet, dass der Schlitz bei gelöster Klemmeinrichtung mit der Begrenzungswand an einem seiner beiden Enden und bei festgeklemmter Klemmeinrichtung mit der Begrenzungswand am anderen seiner beiden Enden an dem mit dem Zahnsegment in Eingriff stehenden Zahnritzel anliegt.

5. Gerät nach einem der vorhergehenden Ansprüche, dadurch gekennzeichnet, dass die Kulissenrampe jeder Kulissensteuerung am Verstellring (38) vorgesehen und durch einen von demselben zum Klemmring hin keilförmig abgewinkelten kreisringförmigen Abschnitt des Verstellringes gebildet ist und dass der Kulissenfolger jeder Kulissensteuerung am Klemmring (32) vorgesehen und durch einen umfangsseitig über den Klemmring hinausragenden, kreisringförmigen Abschnitt des Klemmringes gebildet ist, der den die Kulissenrampe bildenden Abschnitt des Verstellringes zumindest teilweise übergreift.

6. Gerät nach einem der vorhergehenden Ansprüche, dadurch gekennzeichnet, dass das Zahnritzel vom Zahnsegment an dem Verstellring der Klemmeinrichtung lösbar und von derselben abnehmbar ausgebildet ist.

7. Gerät nach Anspruch 6, dadurch gekennzeichnet, dass das Zahnritzel mit einer Handhabe (45) zum drehenden Antreiben desselben versehen ist.

8. Gerät nach einem der vorhergehenden Ansprüche, bei dem der Träger zwei von seiner Nabe entgegengesetzt seitlich auskragende, hohlzylindrische koaxial zur Welle verlaufende, hülsenförmige Ansätze (28; 29) aufweist, an denen je eine Klemmeinrichtung angreift, dadurch gekennzeichnet, dass die Zahnsegmente (42; 42') an den Verstellringen der beiden Klemmeinrichtungen denselben Teilkreisradius und dieselbe Verzahnung aufweisen und dass zum Antreiben der beiden Zahnsegmente zum gemeinsamen Verdrehen der beiden Verstellringe ein einziges zumindest beim Antreiben der beiden Zahnsegmente durch einen Durchbruch im Träger hindurchgeführtes Zahnritzel vorgesehen ist.

9. Gerät nach Anspruch 6 oder 7 und Anspruch 8, dadurch gekennzeichnet, dass die Verstellringe der beiden Klemmeinrichtungen je mindestens ein weiteres koaxial zur Welle verlaufendes Zahnsegment (51, 52; 51', 52') ausweisen und dass diese weiteren Zahnsegmente an den beiden Verstellringen denselben Teilkreisradius und dieselbe Verzahnung aufweisen in Richtung der Welle fluchten und über eine Zahnradbrücke (53, 54) miteinander gekoppelt sind, wobei auch die beiden zum Verdrehen der beiden Verstellringe vorgesehenen Zahnsegmente in Richtung der Welle fluchtend gehalten sind.

10. Gerät nach Anspruch 9, dadurch gekennzeichnet, dass die Zahnradbrücke zwei koaxiale, je mit einem von den zwei weiteren Zahnsementen an den beiden Verstellringen in Eingriff stehende Zahnräder (55, 55', 56, 56') aufweist, die über einen zylindrischen Verbindungsteil miteinander verbunden sind, dessen Durchmesser grösser als der Durchmesser des Fusskreises der beiden Zahnräder ist und der von den zwei weiteren Zahnsegmenten an den beiden Verstellringen in Richtung der Welle schwimmend zwischen den beiden Verstellingen gehalten ist.

11. Gerät nach Anspruch 9 oder 10, dadurch gekenneichnet, dass die Verstellringe der beiden Klemmeinrichtungen je mindestens eine koaxial zur Welle verlaufende, kreisringförmige Ausnehmung (49, 49'; 50, 50') aufweisen und dass diese Ausnehmungen an den beiden Verstellringen in Richtung der Welle fluchten, wobei je an einer der beiden koaxial zur Welle verlaufenden fluchtenden Begrenzungswände der Ausnehmungen eines der weiteren Zahnsegmente vorgesehen ist.

12. Gerät nach einem der Ansprüche 9 bis 11, dadurch gekennzeichnet, dass das zum Verdrehen eines Verstellringes vorgesehene Zahnsegment an demselben und das mindestens eine weitere Zahnsegment an demselben achsensymmetrisch zur Welle angeordnet sind.

## Claims

1. A recording and/or reproducing apparatus for a magnetic tape which apparatus comprises at least one rotatable magnetic head which scans the magnetic tape along information tracks, which is mounted on a support (17; 73) comprising a hub (20; 74) by means of which the support is mounted on a rotatable shaft (22; 75) and at least one hollow cylindrical portion (28; 76) which is coaxial with the shaft, which projects laterally from the hub, and which cooperates with a releasable clamping device for clamping said portion onto the shaft, which clamping device comprises an axially adjustable clamping ring (32; 78) which is coaxial with the shaft and which comprises three clamping projections (33, 34, 35; 79, 80, 81) which project radially towards the shaft, which are inclined equally relative to the shaft, which are arranged axially symmetrically relative to the shaft, and which act on the cylindrical portion, and for adjusting the clamping ring comprises a rotatable adjusting ring (38; 87) which cooperates with the clamping projection clamping the cylindrical portion onto the shaft by means of the clamping ring upon rotation of the adjusting ring, characterized in that on its side which is remote from the clamping ring the adjustable ring bears on the support axially symmetrically relative to the shaft and comprises a gear segment (42; 89) which is coaxial with the shaft and which can be driven by a rotatable pinion (44; 90) to rotate the adjusting ring, which pinion is in mesh with the gear segment at least when said gear segment is driven, the clamping ring has a bore (48; 92) which is situated opposite the gear segment on the adjusting ring, the pinion, which is in mesh with the gear segment, extending through said bore and being at least partly positioned against the bore circumference, and there are provided at least three cam-and-follower means for adjusting the clamping ring upon rotation of the adjusting ring, which means are arranged axially symmetrically relative to the shaft, which means each comprise a cam surface (64, 65, 66; 100, 101, 102, 103) on one of the two rings, which is upwardly inclined towards the other one of the two rings and extends substantially tangentially of the shaft, and a cam follower (67, 68, 69; 104, 105, 106, 107) which cooperates with the cam surface and which is arranged on the other one of the two rings.

2. An apparatus as claimed in Claim 1, characterized in that the bore in the clamping ring is cylindrical and the entire bore circumference is positioned against the pinion extending through said bore.

3. An apparatus as claimed in Claim 1 or 2, characterized in that the adjusting ring (38) has an annular slot which is coaxial with the shaft, the gear segment, which can be driven by the pinion, being situated on one of the two bounding walls of the slot (41) which are coaxial with the shaft.

4. An apparatus as claimed in Claim 3, characterized in that when the clamping device is released the bounding wall at one of the two ends of the slot abuts with the pinion which is in mesh with the gear segment and when the clamping device is tightened the bounding wall at the other end of the slot abuts with the pinion.

5. An apparatus as claimed in any one of the preceding Claims, characterized in that the cam surface of each cam-and-follower means is situated on the adjusting ring (38) and comprise an annular portion of the adjusting ring, which portion tapers towards the clamping ring, and the cam follower of each cam-and- follower means is arranged on the clamping ring (32) and comprises an annular portion of the clamping ring, which annular portion projects from the circumference of the clamping ring and extends at least partly over the camsurface portion of the adjusting ring.

6. An apparatus as claimed in anyone of the preceding Claims, characterized in that the pinion is constructed so as to be disengageable and removable from the gear segment on the adjusting ring of the clamping device.

7. An apparatus as claimed in Claim 6, characterized in that the pinion has an actuating member (45) for the rotary drive of said pinion.

8. An apparatus as claimed in any one of the preceding Claims, in which the support comprises two hollow cylindrical portions (28; 29) which project laterally from its hub in opposite directions, which are coaxial with the shaft, and which each cooperate with a clamping device, characterized in that the gear segments (42; 42') on the adjusting rings of the two clamping devices have equal pitch radii and identical teeth and, for driving the two gear segments in order to rotate the two adjusting rings simultaneously, there is provided one pinion which extends through a cut-out in the support at least when the two gear segments are driven.

9. An apparatus as claimed in Claim 6 or 7, and claim 8, characterized in that the adjusting rings of the two clamping devices each comprise at least one further gear segment (51, 52; 51', 52') which is coaxial with the shaft and said further gear segment on the two adjusting rings have equal pitch radii and identical teeth, are axially in register in and are coupled to each other by a gear bridge (53, 54), the two gear segments for rotating the two adjusting rings also being axially in register.

10. An apparatus as claimed in Claim 9, characterized in that the gear bridge comprises two coaxial gear wheels (55, 55'; 56, 56') which each mesh with one of the two further gear segments on the two adjusting rings, which are connected to each other by means of a cylindrical connecting member, whose diameter is larger than the diameter of the root circle of the two gear wheels and which is retained by the two further gear segments on the two adjusting rings to float axially between the two adjusting rings.

11. An apparatus as claimed in Claim 9 or 10, characterized in that the adjusting rings of the two clamping devices each have at least one annular recess (49, 49'; 50, 50') which is coaxial with the shaft and these recesses in the two adjusting rings are axially in register with each other, one of the further gear segments being formed on one of the two bounding walls of each recess, which walls are coaxial with the shaft and are in register.

12. An apparatus as claimed in any one of the Claims 9 to 11, characterized in that the gear segment which serves for rotating an adjusting ring is situated on said ring and at least one further gear segment is situated on said ring axially symmetrically relative to the shaft.

**Revendications**

1. Appareil d'enregistrement et/ou de reproduction pour une bande magnétique, comportant au moins une tête magnétique pouvant être entraînée en rotation, analysant la bande magnétique suivant des pistes d'informations et montée sur un support (17; 73), qui comprend un moyeu (20; 74) par lequel le support est installé sur un arbre pouvant être entraîné en rotation (22; 75), et au moins une saillie tubulaire (28; 76) cylindrique creuse, coaxiale à l'arbre, qui s'étend latéralement à partir du moyeu, et sur laquelle, en vue de son blocage sur l'arbre, agit un dispositif de serrage desserrable, placé sur la saillie et comprenant un anneau de serrage (32; 78) coaxial à l'arbre et déplaçable dans le sens de celui-ci, duquel partent, radialement en direction de l'arbre, trois languettes de serrage (33, 34, 35; 79, 80, 81) attaquant la saillie tubulaire, disposées symétriquement par rapport à l'axe de l'arbre et présentant la même inclinaison par rapport à celui-ci, et, pour le déplacement de l'anneau de serrage, un anneau de déplacement (38; 87) tournant, coaxial à l'arbre, coopérant avec l'anneau de serrage, les languettes de serrage bloquant la saillie tubulaire sur l'arbre par le déplacement de l'anneau de serrage lors de la rotation de l'anneau de déplacement, caractérisé en ce que l'anneau de déplacement est supporté par le support, au niveau de son côté opposé à l'anneau de serrage, d'une manière symétrique par rapport à l'axe de l'arbre et présente un segment denté (42; 89) coaxial à cet arbre, qui, pour faire tourner l'anneau de déplacement, peut être entraîné par un pignon (44; 90) pouvant être entraîné en rotation et en prise avec le segment denté au moins lors de l'entraînement de celui-ci, que l'anneau de serrage présente une ouverture (48; 92) opposée au segment denté de l'anneau de déplacement, qui est traversée par le pignon en prise avec le segment denté et est en contact avec celui-ci au moins sur une partie de sa périphérie, et que, pour le déplacement de l'anneau de serrage lors de la rotation de l'anneau de déplacement, au moins trois guidages à coulisses symétriques par rapport à l'axe de l'arbre sont prévus et comportent chacun une rampe de coulisse (64, 65, 66; 100, 101, 102, 103) en substance tangentielle à l'arbre, prévue sur l'un des deux anneaux et s'élevant en direction de l'autre des deux anneaux, et un suiveur de coulisse (67, 68, 69; 104, 105, 106, 107) coopérant avec la rampe de coulisse et prévu sur l'autre des deux anneaux.

2. Appareil suivant la revendication 1, caractérisé en ce que l'ouverture dans l'anneau de serrage est de forme cylindrique et s'applique sur toute la périphérie du pignon qui la traverse.

3. Appareil suivant la revendication 1 ou 2, caractérisé en ce que l'anneau de déplacement (38) présente une découpe en arc de cercle qui s'étend coaxialement à l'arbre, le segment denté qui peut être entraîné par le pignon étant prévu sur un des deux bords de délimitation s'étendant coaxialement à l'arbre.

4. Appareil suivant la revendication 3, caractérisé en ce que lorsque le dispositif de serrage est desserré, la découpe est en contact avec le pignon en prise avec le segment denté par une extrémité de son bord de délimitation et lorsque le dispositif de serrage est serré à bloc, elle est en contact avec ce pignon par l'autre extrémité de son bord de délimitation.

5. Appareil suivant l'une quelconque des revendications précédentes, caractérisé en ce que la rampe de coulisse de chaque guidage à coulisse est prévue sur l'anneau de déplacement (38) et est formée par un secteur en arc de cercle de l'anneau de déplacement coudé en forme de coin depuis cet anneau de déplacement en direction de l'anneau de serrage, et que le suiveur de coulisse de chaque guidage à coulisse est prévu sur l'anneau de serrage (32) et est formé par un secteur on arc de cercle de l'anneau de serrage qui s'étend au-delà de la périphérie de l'anneau de serrage et chevauche au moins pour partie le secteur de l'anneau de déplacement formant la rampe de coulisse.

6. Appareil suivant l'une quelconque des revendications précédentes, caractérisé en ce que le pignon peut être dégagé du segment denté prévu sur l'anneau de déplacement du dispositif de serrage et est conçu de façon à pouvoir être retiré de celui-ci.

7. Appareil suivant la revendication 6, caractérisé en ce que le pignon est pourvu d'une poignée (45) permettant de l'entraîner en rotation.

8. Appareil suivant l'une quelconque des revendications précédentes, dans lequel le support comporte deux saillies tubulaires (28, 29) cylindriques creuses, coaxiales à l'arbre, qui s'étendent latéralement en sens opposés à partir de son moyeu et qui sont chacune attaquées par un dispositif de serrage, caractérisé en ce que les segments dentés (42, 42') prévus sur les anneaux de déplacement des deux dispositifs de serrage présentent le même rayon de cercle primitif et la même denture et que, pour entraîner les deux segments dentés en vue de faire tourner les deux anneaux de déplacement à l'unisson, est prévu un seul pignon qui est introduit à travers une ouverture dans le support au moins lors de l'entraînement des deux segments dentés.

9. Appareil suivant la revendication 6 ou 7, et 8, caractérisé en ce que les anneaux de déplacement des deux dispositifs de serrage comportent chacun au moins un autre segment denté (51, 52; 51', 52') coaxial à l'arbre, et que ces autres segments dentés sur les deux anneaux de déplacement présentent le même rayon de cercle primitif et la même denture et sont alignés dans le sens de l'arbre et couplés l'un à l'autre par l'intermédiairs d'un pont à roues dentées (53, 54), les deux segments dentés prévus pour faire tourner les deux anneaux de déplacement étant maintenus également en ligne dans le sens de l'arbre.

10. Appareil suivant la revendication 9, caractérisé en ce que les ponts à roues dentées comprennent deux roues dentées coaxiales (55, 55'; 56, 56') qui sont en prise chacune avec un des deux autres segments dentés sur les deux anneaux de déplacement, qui sont reliés l'un à l'autre par l'intermédiaire d'un organe de couplage cylindrique dont le diamètre est supérieur au diamètre du cercle de pied des deux roues dentées et qui est maintenu flottant entre les anneaux de déplacement dans le sens de l'arbre par les deux autres segments dentés sur les deux anneaux de déplacement.

11. Appareil suivant la revendication 9 ou 10, caractérisé en ce que les anneaux des déplacement des deux dispositifs de serrage présentent chacun au moins un évidement (49, 49'; 50, 50') en arc de cercle qui s'étend coaxialement à l'arbre et que ces évidements sur les deux anneaux de déplacement sont alignés dans le sens de l'arbre, un des autres segments dentés étant prévu chaque fois sur un des deux bords de délimitation des évidements alignés coaxiaux à l'arbre.

12. Appareil suivant l'une quelconque des revendications 9 à 11, caractérisé en ce que, pour faire tourner un anneau de déplacement, le segment denté prévu sur cet anneau et ledit au moins un autre segment denté prévu sur cet anneau sont disposés symétriquement par rapport à l'axe de l'arbre.

Fig.1

Fig.2

**Fig.3**

**Fig.4**

0 156 420

Fig.5

Fig.6

Fig.7

Fig.8